# EUROPEAN PATENT APPLICATION

(11) **EP 4 675 123 A1**
(43) Date of publication of application: **07.01.2026**
(21) Application number: 23925373.5
(22) Date of filing: 08.11.2023
(51) Int. Cl.: F16F 9/14

(54) **ROTARY DAMPER**

(30) Priority: 27.02.2023 JP 2023028448
(71) Applicant: SOMIC MANAGEMENT HOLDINGS INC., Sumida-ku, Tokyo 130-0004 (JP)
(72) Inventor: KOBAYASHI, Daisuke, Hamamatsu-shi, Shizuoka 431-2103 (JP); OZAKI, Keigo, Brewer, Maine 04412 (US)
(74) Representative: Ter Meer Steinmeister & Partner
(86) International application number: PCT/JP2023/040217
(87) International publication number: WO 2024/180820

(57) **Abstract**

The present invention provides a rotary damper (10) having a non-rotation section (S1) of a rotating member (12), the rotary damper (10) including: a first means that causes a first engaged portion (13) to follow an engagement portion (31) when the engagement portion (31) rotates from an end point (E) of a movable range (R) of the engagement portion (31) to a predetermined position (P); and a second means that stops the first engaged portion (13) from following at the predetermined position (P).

## Description

### Technical Field

The present invention relates to a rotary damper.

### Background Art

Conventionally, there has been known a rotary damper including a non-rotating member, a rotating member that rotates around the non-rotating member, a first engaged portion provided on the rotating member, and a second engaged portion provided on the rotating member with a space from the first engaged portion, in which an engagement portion that is installed between the first engaged portion and the second engaged portion and rotates together with a control target object presses the first engaged portion to rotate the rotating member in one direction, a braking force is generated when the rotating member rotates in one direction, and the rotary damper has a non-rotation section of the rotating member while the engagement portion rotates from a start point of a movable range of the engagement portion to an end point of the movable range of the engagement portion.

For example, Patent Literature 1 discloses a rotary damper including a non-rotating member (fixed-side damper 4b), a rotating member (movable-side damper 4a) that rotates around the non-rotating member, a first engaged portion (one end of guide groove 7a) provided on the rotating member, and a second engaged portion (the other end of guide groove 7a) provided on the rotating member with a space from the first engaged portion, in which an engagement portion (stopper member 6) that is installed between the first engaged portion and the second engaged portion and rotates together with a control target object (seat back frame 1) presses the first engaged portion to rotate the rotating member in one direction, a braking force is generated when the rotating member rotates in one direction, and the rotary damper has a non-rotation section (Figs. 2(a), 2(b), and 3 of Patent Literature 1) of the rotating member while the engagement portion rotates from a start point (Fig. 2(a) of Patent Literature 1) of a movable range of the engagement portion to an end point (Fig. 2(c) of Patent Literature 1) of the movable range of the engagement portion.

However, in the rotary damper disclosed in Patent Literature 1, when the engagement portion rotates from the end point toward the start point, the rotating member does not rotate until the engagement portion comes into contact with the second engaged portion, and therefore, even when the engagement portion rotates toward the end point during this time, a braking force of the rotary damper is not generated. Therefore, there is a problem that the seat back vigorously collides with a seat cushion when the hand is released from the seat back during this time.

### Citation List

### Patent Literature

Patent Literature 1: JP 2007-050765 A

### Summary of Invention

### Technical Problem

An object to be achieved by the present invention is to enable a rotary damper having a non-rotation section of a rotating member to generate a braking force when an engagement portion rotates toward an end point of a movable range of the engagement portion while the engagement portion rotates from the end point to a predetermined position.

### Solution to Problem

In order to achieve the above object, the present invention provides a rotary damper described below.
1. A rotary damper including: a non-rotating member; a rotating member that rotates around the non-rotating member; a first engaged portion that is provided on the rotating member; and a second engaged portion that is provided on the rotating member with a space from the first engaged portion, in which an engagement portion that is installed between the first engaged portion and the second engaged portion and rotates together with a control target object presses the first engaged portion to rotate the rotating member in one direction, a braking force is generated when the rotating member rotates in one direction, and the rotary damper has a non-rotation section of the rotating member while the engagement portion rotates from a start point of a movable range of the engagement portion to an end point of the movable range of the engagement portion, wherein the rotary damper comprises a first means that causes the first engaged portion to follow the engagement portion when the engagement portion rotates from the end point to a predetermined position; and a second means that stops the first engaged portion from following at the predetermined position.
2. A rotary damper including: a non-rotating member; a rotating member that rotates around the non-rotating member; a first engaged portion that is provided on the rotating member; and a second engaged portion that is provided on the rotating member with a space from the first engaged portion, in which an engagement portion that is installed between the first engaged portion and the second engaged portion and rotates together with a control target object presses the first engaged portion to rotate the rotating member in one direction, a braking force is generated when the rotating member rotates in one direction, and the rotary damper has a non-rotation section of the rotating member while the engagement portion rotates from a start point of a movable range of the engagement portion to an end point of the movable range of the engagement portion, wherein the rotary damper comprises a spring having a first function that causes the first engaged portion to follow the engagement portion when the engagement portion rotates from the end point to a predetermined position; and a second function that stops the first engaged portion from following at the predetermined position.

### Advantageous Effects of Invention

According to the invention of 1, in the rotary damper having the non-rotation section of the rotating member while the engagement portion rotates from the start point of the movable range of the engagement portion to the end point of the movable range of the engagement portion, the rotary damper includes the first means for causing the first engaged portion to follow the engagement portion when the engagement portion rotates from the end point to the predetermined position, and therefore, when the engagement portion rotates toward the end point while the engagement portion rotates from the end point to the predetermined position, a braking force can be generated. In addition, since the invention of 1 includes the second means for stopping the first engaged portion from following at the predetermined position, it is also possible not to generate the braking force when the engagement portion rotates from the predetermined position to the start point.

According to the invention of 2, in the rotary damper having the non-rotation section of the rotating member while the engagement portion rotates from the start point of the movable range of the engagement portion to the end point of the movable range of the engagement portion, the rotary damper includes the spring having the first function for causing the first engaged portion to follow the engagement portion when the engagement portion rotates from the end point to the predetermined position, and therefore, when the engagement portion rotates toward the end point while the engagement portion rotates from the end point to the predetermined position, a braking force can be generated. In addition, since the invention of 2 has the second function for stopping the first engaged portion from following at the predetermined position, it is also possible not to generate the braking force when the engagement portion rotates from the predetermined position to the start point.

### Brief Description of Drawings

Fig. 1 is a view illustrating a state in which a rotary damper according to a first example is installed in an automotive seat.
Fig. 2 is a view illustrating an internal structure of the rotary damper adopted in the first example.
Fig. 3 is a view illustrating a first means adopted in the first example.
Fig. 4 is an enlarged view of portion A in Fig. 3.
Fig. 5 is a view for describing an operation of the rotary damper according to the first example, and illustrates a state in which an engagement portion is located at a predetermined position.
Fig. 6 is a view for describing an operation of the rotary damper according to the first example, and illustrates a state in which the engagement portion is located at an end point of a rotation range of the engagement portion.
Fig. 7 is a view for describing an operation of the rotary damper according to the first example, and illustrates a state in which the engagement portion has come out of a groove.
Fig. 8 is a view illustrating a cap adopted in a second example.
Fig. 9 is a view illustrating a state in which a rotary damper according to a third example is installed in an automotive seat.
Fig. 10 is a view illustrating an internal structure of the rotary damper adopted in the third example.
Fig. 11 is a view for describing an operation of the rotary damper according to the third example, and illustrates a state in which an engagement portion is located at a predetermined position.
Fig. 12 is a view for describing an operation of the rotary damper according to the third example, and illustrates a state in which the engagement portion is located at an end point of a rotation range of the engagement portion.
Fig. 13 is a view for describing an operation of the rotary damper according to the third example, and illustrates a state in which the engagement portion has separated from a first engaged portion.
Fig. 14 is a view illustrating a state in which a rotary damper according to a fourth example is installed in an automotive seat.
Fig. 15 is a view illustrating an internal structure of the rotary damper adopted in the fourth example.
Fig. 16 is a view for describing an operation of the rotary damper according to the fourth example, and illustrates a state in which an engagement portion is located at a predetermined position.
Fig. 17 is a view for describing an operation of the rotary damper according to the fourth example, and illustrates a state in which the engagement portion is located at an end point of a rotation range of the engagement portion.
Fig. 18 is a view for describing an operation of the rotary damper according to the fourth example, and illustrates a state in which the engagement portion has separated from a first engaged portion.
Fig. 19 is a view illustrating an internal structure of a rotary damper according to a fifth example.

### Description of Embodiments

Hereinafter, examples of the present invention will be described with reference to the drawings, but the present invention is not limited to the examples.

### First Example

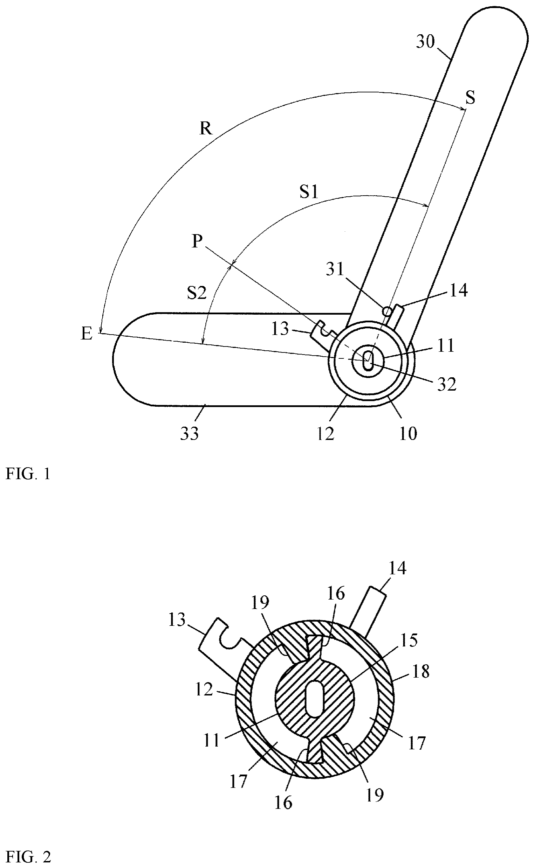

Referring to Fig. 1, a rotary damper 10 according to the first example is installed in an automotive seat. A seat back of the automotive seat is an example of a control target object 30. However, the control target object 30 is not limited thereto. The control target object 30 includes an engagement portion 31 that rotates together with the control target object 30. In the first example, a transmission shaft attached to a frame of the seat back is an example of the engagement portion 31. However, the engagement portion 31 is not limited thereto.

In Fig. 1, R is a movable range of the engagement portion 31, S is a start point of the movable range R of the engagement portion 31, E is an end point of the movable range R of the engagement portion 31, P is a predetermined position, S1 is a non-rotation section of a rotating member 12, and S2 is a rotation section of the rotating member 12.

The predetermined position P is a position where the engagement portion 31 that rotates from the start point S toward the end point E first engages with a first engaged portion 13. The predetermined position P can be arbitrarily set by changing the arrangement of vanes 16. However, the predetermined position P is not the same position as the start point S or the end point E. The non-rotation section S1 is a section in which the rotating member 12 does not rotate due to the rotation of the engagement portion 31. The rotation section S2 is a section in which the rotating member 12 rotates due to the rotation of the engagement portion 31.

Referring to Fig. 2, the rotary damper 10 is configured to include a non-rotating member 11, the rotating member 12, the first engaged portion 13 provided on the rotating member 12, and a second engaged portion 14 provided on the rotating member 12 with a space from the first engaged portion 13.

The non-rotating member 11 is a member that does not rotate when the rotary damper 10 is used. The non-rotating member 11 is configured to include a shaft portion 15 coupled to a shaft 32 that is a rotation center of the control target object 30, and the vanes 16 protruding from the shaft portion 15. The vanes 16 are installed in oil chambers 17 formed around the shaft portion 15. Oil is poured into the oil chambers 17.

The rotating member 12 is a member that rotates around the non-rotating member 11 when the rotary damper 10 is used. The rotating member 12 is configured to include a peripheral wall 18 having a cylindrical shape and partition walls 19 protruding from an inner peripheral surface of the peripheral wall 18. The partition walls 19 are partitions that separate the two oil chambers 17.

The first engaged portion 13 is a portion that engages with the engagement portion 31 when the engagement portion 31 rotates from the start point S toward the end point E. In the first example, a first projection protruding from an outer peripheral surface of the peripheral wall 18 is an example of the first engaged portion 13. However, the first engaged portion 13 is not limited thereto.

The second engaged portion 14 is a portion that engages with the engagement portion 31 when the engagement portion 31 rotates from the end point E toward the start point S. In the first example, a second projection protruding from the outer peripheral surface of the peripheral wall 18 with a space from the first projection is an example of the second engaged portion 14. However, the second engaged portion 14 is not limited thereto.

The space between the first engaged portion 13 and the second engaged portion 14 is set such that the engagement portion 31 can rotate between the first engaged portion 13 and the second engaged portion 14. The non-rotation section S1 is determined by this space.

The rotary damper 10 according to the first example is configured to further include the first means that causes the first engaged portion 13 to follow the engagement portion 31 when the engagement portion 31 rotates from the end point E to the predetermined position P, and a second means that stops the first engaged portion 13 from following at the predetermined position P.

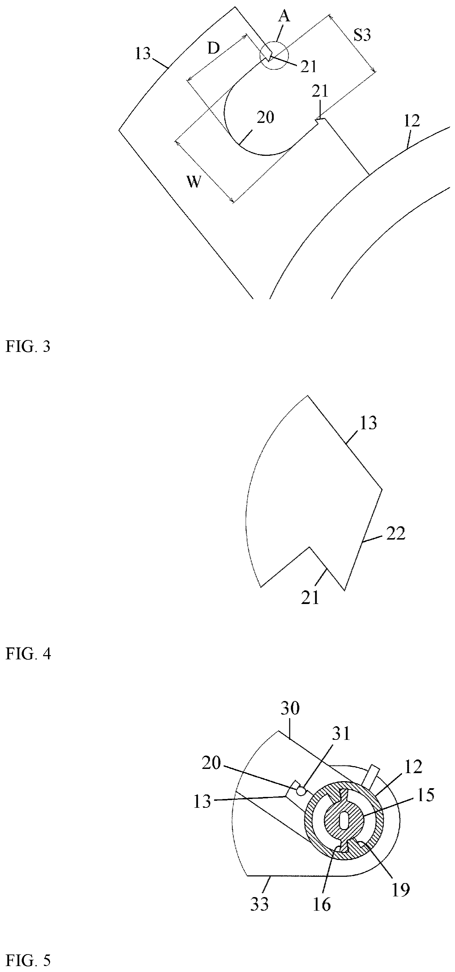

Referring to Fig. 3, the first means adopted in the first example is configured to include a groove 20 formed on the first engaged portion 13 and claws 21 formed in the groove 20.

The groove 20 is formed in a U shape, and has a width W and a depth D capable of accommodating the engagement portion 31 in the groove 20. Two claws 21 are provided, and a space S3 between a first claw 21 protruding from one side wall of the groove 20 toward the other side wall of the groove 20 facing the one side wall and a second claw 21 protruding from the other side wall of the groove 20 toward the one side wall of the groove 20 is set to be shorter than a diameter of the engagement portion 31 in order to prevent the engagement portion 31 accommodated in the groove 20 from coming out.

Referring to Fig. 4, each of the two claws 21 has an inclined surface 22 for facilitating entry of the engagement portion 31 into the groove 20.

The second means adopted in the first example is configured to include the vanes 16 and the partition walls 19 (see Fig. 2). The partition walls 19 move in the oil chambers 17 as a result of the rotation of the rotating member 12, while the vanes 16 do not move at a fixed position, and therefore, when the rotating member 12 rotates in the opposite direction (that is, the direction opposite to the one direction), the partition walls 19 contact the vanes 16 at the predetermined position P. Thus, the rotation of the rotating member 12 in the opposite direction is prevented. The position of the vanes 16 is set to correspond to a position (that is, the predetermined position P) at which the engagement portion 31 comes out of the groove 20.

The rotary damper 10 according to the first example operates as described below. That is, when the seat back (control target object 30) is inclined (that is, the seat back is brought close to a seat cushion 33), the engagement portion 31 rotates from the start point S toward the end point E. Then, the engagement portion 31 engages with the first engaged portion 13 at the predetermined position P. Within the movable range R of the engagement portion 31, a section in which the engagement portion 31 rotates from the start point S to the predetermined position P is the non-rotation section S1 of the rotating member 12, and the rotating member 12 does not rotate. Accordingly, in the non-rotation section S1, the braking force of the rotary damper 10 is not generated. As described above, the rotary damper 10 according to the first example has the non-rotation section S1 of the rotating member 12 while the engagement portion 31 rotates from the start point S to the end point E.

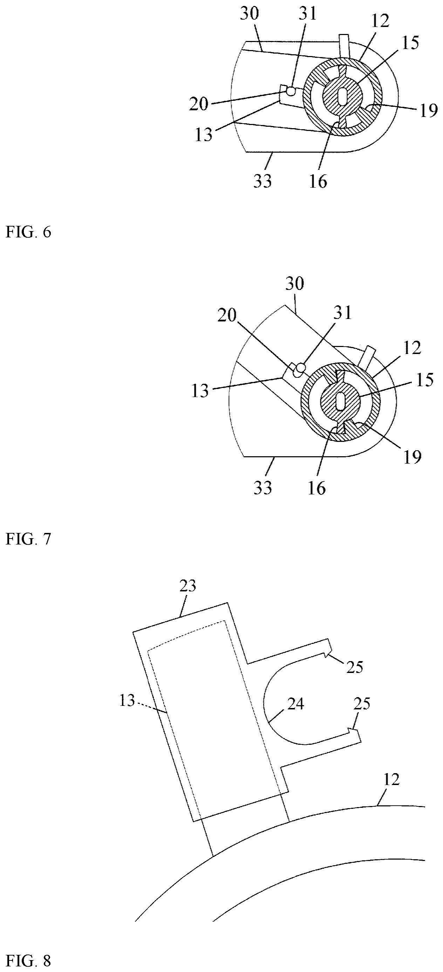

When the engagement portion 31 and the first engaged portion 13 are engaged, the engagement portion 31 is accommodated in the groove 20 constituting the first means as illustrated in Fig. 5. In this state, when the engagement portion 31 rotates toward the end point E, the engagement portion 31 presses the first engaged portion 13, so that the rotating member 12 rotates in one direction. This rotation causes the partition walls 19 to move around the shaft portion 15 while receiving the resistance of the oil, so that the rotary damper 10 generates the braking force (that is, a force for reducing the rotation speed of the engagement portion 31) when the rotating member 12 rotates in one direction. As a result, the seat back is inclined at a low speed (that is, a speed lower than the speed at which the seat back is inclined by its own weight) and contacts the seat cushion 33. Fig. 6 illustrates a state in which the engagement portion 31 is located at the end point E.

When the engagement portion 31 rotates from the end point E to the predetermined position P, the first engaged portion 13 moves following the rotation of the engagement portion 31 since the claws 21 constituting the first means prevent the engagement portion 31 accommodated in the groove 20 constituting the first means from coming out of the groove 20. When the hand raising the seat back is released from the seat back in a state where the engagement portion 31 exists between the end point E and the predetermined position P, the engagement portion 31 that has rotated toward the start point S rotates toward the end point E, and the rotating member 12 rotates in one direction to generate the braking force. Accordingly, with the rotary damper 10 according to the first example, even when the hand is released from the seat back in a state where the engagement portion 31 exists between the end point E and the predetermined position P, the seat back can be inclined at a low speed.

Note that the rotary damper 10 adopted in the first example generates the braking force even when the rotating member 12 rotates in the opposite direction when the engagement portion 31 rotates from the end point E to the predetermined position P, and therefore, a load when raising the seat back is large. In order to solve this problem, for example, a flow path of the oil may be formed in the vanes 16 or the partition walls 19, and a check valve may be provided in the flow path to suppress the generation of the braking force, or a spring adopted in the third example may be combined to reduce the load.

When the engagement portion 31 rotates from the predetermined position P to the start point S, the partition walls 19 constituting the second means contact the vanes 16 constituting the second means at the predetermined position P, so that the vanes 16 prevent the movement of the partition walls 19, and therefore, as illustrated in Fig. 7, the engagement portion 31 comes out of the groove 20. As described above, the second means has a function of stopping the first engaged portion 13 from following the engagement portion 31 at the predetermined position P. As described above, since the engagement portion 31 comes out of the groove 20, the rotation of the rotating member 12 in the opposite direction is stopped, and therefore, when the engagement portion 31 rotates from the predetermined position P to the start point S, that is, in the non-rotation section S1 of the rotating member 12, the braking force is not generated.

### Second Example

Referring to Fig. 8, the rotary damper 10 according to the second example is configured to include a cap 23 covering the first engaged portion 13. The second example is different from the first example in that the first means is formed in the cap 23.

That is, the first means adopted in the second example is configured to include a groove 24 formed on the cap 23 and claws 25 formed in the groove 24. The groove 24 has a function of accommodating the engagement portion 31, and the claws 25 have a function of preventing the engagement portion 31 accommodated in the groove 24 from coming out, which is the same as the groove 20 and the claws 21 in the first example.

Similarly to the first example, the rotary damper 10 according to the second example includes the first means (the groove 24 and the claws 25) that causes the first engaged portion 13 to follow the engagement portion 31 when the engagement portion 31 rotates from the end point E to the predetermined position P, and therefore, when the engagement portion 31 rotates toward the end point E while the engagement portion 31 rotates from the end point E to the predetermined position P, the braking force is generated. In addition, similarly to the first example, the rotary damper 10 according to the second example includes the second means (the vanes 16 and the partition walls 19) for stopping the first engaged portion 13 from following at the predetermined position P, and therefore, when the engagement portion 31 rotates from the predetermined position P to the start point S, the braking force is not generated.

### Third Example

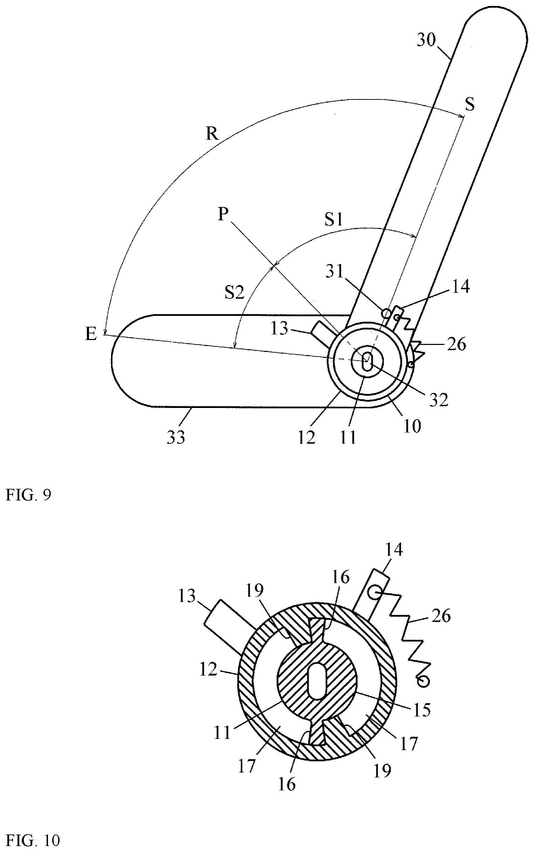

Referring to Fig. 9, the rotary damper 10 according to the third example is installed in an automotive seat. The seat back of the automotive seat is an example of the control target object 30. However, the control target object 30 is not limited thereto. The control target object 30 includes the engagement portion 31 that rotates together with the control target object 30. In the third example, the transmission shaft attached to the frame of the seat back is an example of the engagement portion 31. However, the engagement portion 31 is not limited thereto.

In Fig. 9, R is the movable range of the engagement portion 31, S is the start point of the movable range R of the engagement portion 31, E is the end point of the movable range R of the engagement portion 31, P is the predetermined position, S1 is the non-rotation section of the rotating member 12, and S2 is the rotation section of the rotating member 12. The definitions of the predetermined position P, the non-rotation section S1, and the rotation section S2 are the same as the definitions described in the first example.

Referring to Fig. 10, the rotary damper 10 according to the third example is different from that of the first example that the first means is configured to include a spring 26.

In the present example, a tension coil spring is adopted as the spring 26. However, the type of the spring 26 is not limited thereto. One end of the spring 26 is attached to the second engaged portion 14. However, the attachment place of the one end of the spring 26 is not limited thereto. The other end of the spring 26 is attached to the frame of the seat cushion 33 as illustrated in Fig. 9. The frame of the seat cushion 33 is an example of the attachment place of the other end of the spring 26.

The spring 26 has a function of causing the first engaged portion 13 to follow the engagement portion 31 when the engagement portion 31 rotates from the end point E to the predetermined position P.

The rotary damper 10 according to the third example operates as described below. That is, when the seat back (control target object 30) is inclined, the engagement portion 31 rotates from the start point S toward the end point E. Then, the engagement portion 31 engages with the first engaged portion 13 at the predetermined position P. Within the movable range R of the engagement portion 31, a section in which the engagement portion 31 rotates from the start point S to the predetermined position P is the non-rotation section S1 of the rotating member 12, and the rotating member 12 does not rotate. Accordingly, in the non-rotation section S1, the braking force of the rotary damper 10 is not generated. As described above, the rotary damper 10 according to the third example has the non-rotation section S1 of the rotating member 12 while the engagement portion 31 rotates from the start point S to the end point E.

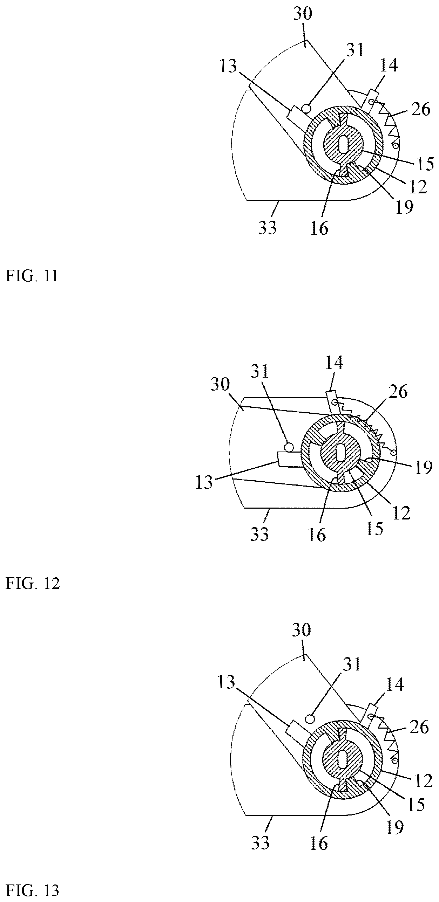

When the engagement portion 31 and the first engaged portion 13 are engaged, the engagement portion 31 is in a state of being in contact with the first engaged portion 13 as illustrated in Fig. 11. In this state, when the engagement portion 31 rotates toward the end point E, the engagement portion 31 presses the first engaged portion 13, so that the rotating member 12 rotates in one direction. This rotation causes the partition walls 19 to move around the shaft portion 15 while receiving the resistance of the oil, so that the rotary damper 10 generates the braking force when the rotating member 12 rotates in one direction. In addition, when the engagement portion 31 rotates toward the end point E in a state where the engagement portion 31 is in contact with the first engaged portion 13, the spring 26 extends and elastic energy is stored in the spring 26. As a result, the seat back is inclined at a low speed and comes into contact with the seat cushion 33. Fig. 12 illustrates a state in which the engagement portion 31 is located at the end point E.

When the engagement portion 31 rotates from the end point E to the predetermined position P, the first engaged portion 13 moves following the rotation of the engagement portion 31 by the restoring force (release of elastic energy) of the spring 26. When the hand raising the seat back is released from the seat back in a state where the engagement portion 31 exists between the end point E and the predetermined position P, the engagement portion 31 that has rotated toward the start point S rotates toward the end point E, and the rotating member 12 rotates in one direction to generate the braking force. Accordingly, with the rotary damper 10 according to the third example, even when the hand is released from the seat back in a state where the engagement portion 31 exists between the end point E and the predetermined position P, the seat back can be inclined at a low speed.

Note that the rotary damper 10 adopted in the third example generates the braking force even when the rotating member 12 rotates in the opposite direction when the engagement portion 31 rotates from the end point E to the predetermined position P. However, since the braking force is disabled or reduced by the restoring force of the spring 26, the load when raising the seat back is reduced.

When the engagement portion 31 rotates from the predetermined position P to the start point S, the partition walls 19 constituting the second means contact the vanes 16 constituting the second means at the predetermined position P, so that the vanes 16 prevent the movement of the partition walls 19, and therefore, as illustrated in Fig. 13, the engagement portion 31 separates from the first engaged portion 13. As described above, the second means has a function of stopping the first engaged portion 13 from following the engagement portion 31 at the predetermined position P. As described above, when the engagement portion 31 separates from the first engaged portion 13, the rotation of the rotating member 12 in the opposite direction is stopped, and therefore, when the engagement portion 31 rotates from the predetermined position P to the start point S, that is, in the non-rotation section S1 of the rotating member 12, the braking force is not generated.

### Fourth Example

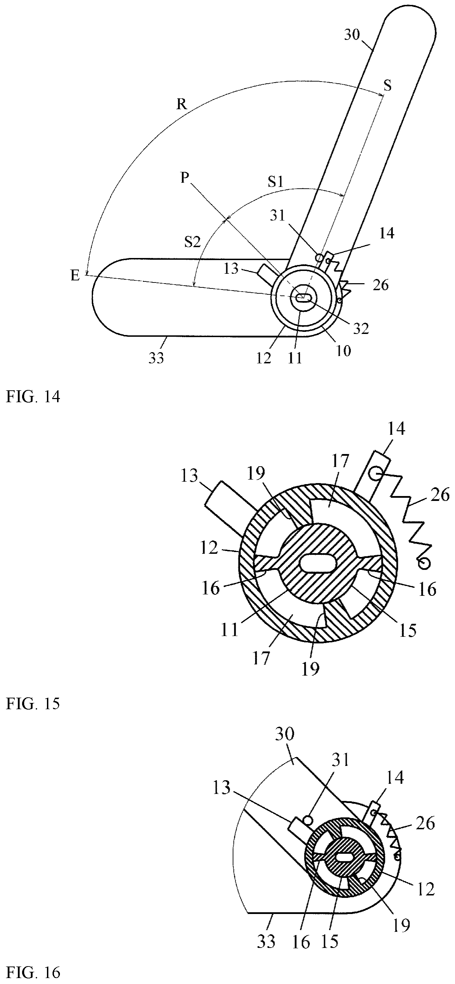

Referring to Fig. 14, the rotary damper 10 according to the fourth example is installed in an automotive seat. The seat back of the automotive seat is an example of the control target object 30. However, the control target object 30 is not limited thereto. The control target object 30 includes the engagement portion 31 that rotates together with the control target object 30. In the fourth example, the transmission shaft attached to the frame of the seat back is an example of the engagement portion 31. However, the engagement portion 31 is not limited thereto.

In Fig. 14, R is the movable range of the engagement portion 31, S is the start point of the movable range R of the engagement portion 31, E is the end point of the movable range R of the engagement portion 31, P is the predetermined position, S1 is the non-rotation section of the rotating member 12, and S2 is the rotation section of the rotating member 12. The definitions of the predetermined position P, the non-rotation section S1, and the rotation section S2 are the same as the definitions described in the first example.

Referring to Fig. 15, the rotary damper 10 according to the fourth example is different from that of the first example that the rotary damper 10 is configured to include the spring 26 instead of the first means and the second means.

In the present example, a tension coil spring is adopted as the spring 26. However, the type of the spring 26 is not limited thereto. One end of the spring 26 is attached to the second engaged portion 14. However, the attachment place of the one end of the spring 26 is not limited thereto. The other end of the spring 26 is attached to the frame of the seat cushion 33 as illustrated in Fig. 14. The frame of the seat cushion 33 is an example of the attachment place of the other end of the spring 26.

The spring 26 has a first function of causing the first engaged portion 13 to follow the engagement portion 31 when the engagement portion 31 rotates from the end point E to the predetermined position P and a second function of stopping the first engaged portion 13 from following at the predetermined position P.

The rotary damper 10 according to the fourth example operates as described below. That is, when the seat back (control target object 30) is inclined, the engagement portion 31 rotates from the start point S toward the end point E. Then, the engagement portion 31 engages with the first engaged portion 13 at the predetermined position P. Within the movable range R of the engagement portion 31, a section in which the engagement portion 31 rotates from the start point S to the predetermined position P is the non-rotation section S1 of the rotating member 12, and the rotating member 12 does not rotate. Accordingly, in the non-rotation section S1, the braking force of the rotary damper 10 is not generated. As described above, the rotary damper 10 according to the fourth example has the non-rotation section S1 of the rotating member 12 while the engagement portion 31 rotates from the start point S to the end point E.

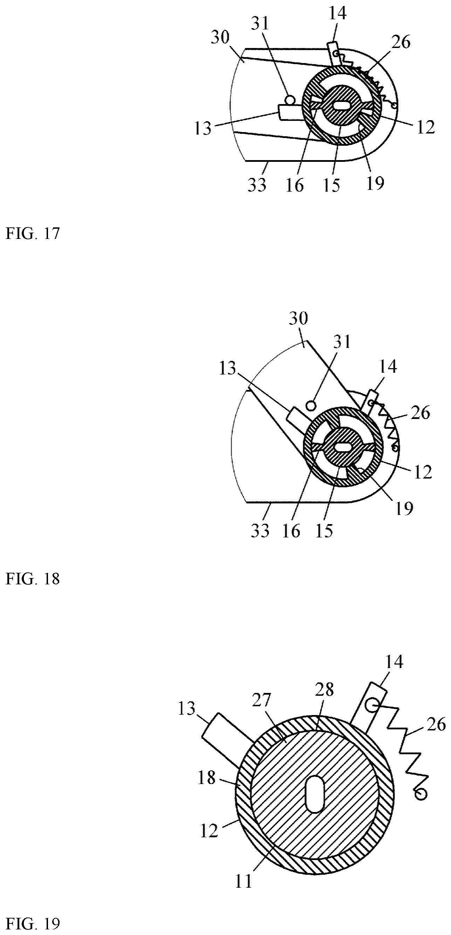

When the engagement portion 31 and the first engaged portion 13 are engaged, the engagement portion 31 is in a state of being in contact with the first engaged portion 13 as illustrated in Fig. 16. In this state, when the engagement portion 31 rotates toward the end point E, the engagement portion 31 presses the first engaged portion 13, so that the rotating member 12 rotates in one direction. This rotation causes the partition walls 19 to move around the shaft portion 15 while receiving the resistance of the oil, so that the rotary damper 10 generates the braking force when the rotating member 12 rotates in one direction. In addition, when the engagement portion 31 rotates toward the end point E in a state where the engagement portion 31 is in contact with the first engaged portion 13, the spring 26 extends and elastic energy is stored in the spring 26. As a result, the seat back is inclined at a low speed and comes into contact with the seat cushion 33. Fig. 17 illustrates a state in which the engagement portion 31 is located at the end point E.

When the engagement portion 31 rotates from the end point E to the predetermined position P, the first engaged portion 13 moves following the rotation of the engagement portion 31 by the restoring force (release of elastic energy) of the spring 26. When the hand raising the seat back is released from the seat back in a state where the engagement portion 31 exists between the end point E and the predetermined position P, the engagement portion 31 that has rotated toward the start point S rotates toward the end point E, and the rotating member 12 rotates in one direction to generate the braking force. Accordingly, with the rotary damper 10 according to the fourth example, even when the hand is released from the seat back in a state where the engagement portion 31 exists between the end point E and the predetermined position P, the seat back can be inclined at a low speed.

Note that the rotary damper 10 adopted in the fourth example generates the braking force even when the rotating member 12 rotates in the opposite direction when the engagement portion 31 rotates from the end point E to the predetermined position P. However, since the braking force is disabled or reduced by the restoring force of the spring 26, the load when raising the seat back is reduced.

When the engagement portion 31 rotates from the predetermined position P to the start point S, the spring 26 returns to the natural length at the predetermined position P, and therefore, as illustrated in Fig. 18, the engagement portion 31 separates from the first engaged portion 13. As described above, the spring 26 has a function of stopping the first engaged portion 13 from following the engagement portion 31 at the predetermined position P. As described above, when the engagement portion 31 separates from the first engaged portion 13, the rotation of the rotating member 12 in the opposite direction is stopped, and therefore, when the engagement portion 31 rotates from the predetermined position P to the start point S, that is, in the non-rotation section S1 of the rotating member 12, the braking force is not generated.

### Fifth Example

Referring to Fig. 19, the rotary damper 10 according to the fifth example is different from that of the fourth example in that the non-rotating member 11 is configured to include a body portion 27 coupled to a shaft that is a rotation center of the control target object 30.

The body portion 27 has a circular cross section and has an outer diameter slightly smaller than an inner diameter of the peripheral wall 18 constituting the rotating member 12. A viscous material such as grease is poured into a gap 28 formed between the body portion 27 and the peripheral wall 18.

Similarly to the fourth example, the rotary damper 10 according to the fifth example includes the spring 26 that causes the first engaged portion 13 to follow the engagement portion 31 when the engagement portion 31 rotates from the end point E to the predetermined position P. When the engagement portion 31 rotates toward the end point E while the engagement portion 31 rotates from the end point E to the predetermined position P, viscous shear stress of the viscous material is generated, and this acts on the control target object as a braking force. In addition, similarly to the fourth example, the rotary damper 10 according to the fifth example includes the spring 26 for stopping the first engaged portion 13 from following at the predetermined position P, and therefore, when the engagement portion 31 rotates from the predetermined position P to the start point S, the braking force (viscous shear stress of the viscous material) is not generated.

**Reference Signs List**

| | | | |
|---|---|---|---|
| 10 | Rotary damper | 24 | Groove |
| 11 | Non-rotating member | 25 | Claw |
| 12 | Rotating member | 26 | Spring |
| 13 | First engaged portion | 27 | Body portion |
| 14 | Second engaged portion | 28 | Gap |
| 15 | Shaft portion | 30 | Control target object |
| 16 | Vane | 31 | Engagement portion |
| 17 | Oil chamber | 32 | Shaft |
| 18 | Peripheral wall | 33 | Seat cushion |
| 19 | Partition wall | | |
| 20 | Groove | | |
| 21 | Claw | | |
| 22 | Inclined surface | | |
| 23 | Cap | | |

## Claims

1. A rotary damper comprising: a non-rotating member; a rotating member that rotates around the non-rotating member; a first engaged portion that is provided on the rotating member; and a second engaged portion that is provided on the rotating member with a space from the first engaged portion, in which an engagement portion that is installed between the first engaged portion and the second engaged portion and rotates together with a control target object presses the first engaged portion to rotate the rotating member in one direction, a braking force is generated when the rotating member rotates in one direction, and the rotary damper has a non-rotation section of the rotating member while the engagement portion rotates from a start point of a movable range of the engagement portion to an end point of the movable range of the engagement portion,
wherein the rotary damper comprises a first means that causes the first engaged portion to follow the engagement portion when the engagement portion rotates from the end point to a predetermined position; and a second means that stops the first engaged portion from following at the predetermined position.

2. The rotary damper according to claim 1, wherein the first means is configured to include a groove formed on the first engaged portion and a claw formed in the groove, the groove accommodates the engagement portion, and the claw prevents the engagement portion accommodated in the groove from coming out.

3. The rotary damper according to claim 1, comprising: a cap that covers the first engaged portion, wherein the first means is configured to include a groove formed on the cap and a claw formed in the groove, the groove accommodates the engagement portion, and the claw prevents the engagement portion accommodated in the groove from coming out.

4. The rotary damper according to claim 1, wherein the first means is configured to include a spring having a function of causing the first engaged portion to follow the engagement portion when the engagement portion rotates from the end point to the predetermined position.

5. The rotary damper according to claim 1, wherein the second means is configured to include a vane provided on the non-rotating member and a partition wall provided on the rotating member, and the vane and the partition wall come into contact with each other at the predetermined position to prevent the rotating member from rotating in an opposite direction.

6. A rotary damper comprising: a non-rotating member; a rotating member that rotates around the non-rotating member; a first engaged portion that is provided on the rotating member; and a second engaged portion that is provided on the rotating member with a space from the first engaged portion, in which an engagement portion that is installed between the first engaged portion and the second engaged portion and rotates together with a control target object presses the first engaged portion to rotate the rotating member in one direction, a braking force is generated when the rotating member rotates in one direction, and the rotary damper has a non-rotation section of the rotating member while the engagement portion rotates from a start point of a movable range of the engagement portion to an end point of the movable range of the engagement portion,
wherein the rotary damper comprises a spring having a first function that causes the first engaged portion to follow the engagement portion when the engagement portion rotates from the end point to a predetermined position; and a second function that stops the first engaged portion from following at the predetermined position.
